# EUROPEAN PATENT SPECIFICATION

(11) **EP 3 163 852 B1**
(45) Date of publication and mention of the grant of the patent: **10.05.2023**
(21) Application number: 14894189.1
(22) Date of filing: 11.09.2014
(51) Int. Cl.: H04M 1/725, G06K 7/08, H04W 12/08, G06F 21/35, H04W 4/00, H04W 4/02, H04M 1/67

(54) **CLOSE-DISTANCE AUTOMATIC UNLOCKING METHOD AND SYSTEM FOR MOBILE TERMINAL**
AUTOMATISCHES ENTRIEGELUNGSVERFAHREN AUS DER NÄHE UND SYSTEM FÜR MOBILES ENDGERÄT
PROCÉDÉ ET SYSTÈME DE DÉVERROUILLAGE AUTOMATIQUE À FAIBLE DISTANCE POUR TERMINAL MOBILE

(30) Priority: 24.06.2014 CN 201410285438
(43) Date of publication of application: 03.05.2017
(73) Proprietor: Huizhou TCL Mobile Communication Co., Ltd., Huizhou, Guangdong 516006 (CN)
(72) Inventor: HU, Binghui, Huizhou Guangdong 516006 (CN); ZHANG, Jie, Huizhou Guangdong 516006 (CN)
(74) Representative: Murgitroyd & Company
(86) International application number: PCT/CN2014/086305
(87) International publication number: WO 2015/196569

(56) References cited:
- CN-A- 103 647 587
- CN-A- 103 647 587
- CN-U- 201 805 472
- CN-U- 201 805 472

## Description

### FIELD OF THE DISCLOSURE

The present disclosure relates to the field of mobile communication, and in particular, to an automatic unlocking method.

### BACKGROUND OF THE DISCLOSURE

With the increasing popularity of mobile terminals, people's lives are getting closer and closer to mobile terminals. However, a mobile terminal in the prior art is not enabled with automatic unlocking functionality, and additionally, in order to turn on the phone, especially in high-efficiency work, it would be needed to swipe in the touch area or enter a passcode in order to unlock the phone, which is extremely inconvenient.

Therefore, the prior art has yet to be improved and developed.

The Chinese Application CN201310745822.8A filed on December 30, 2013 discloses a method and a system for unlocking a mobile terminal, a mobile terminal and a wearable electronic device. The method for unlocking the mobile terminal by utilizing the wearable electronic device comprises the following steps of establishing the near-distance communication connection between the mobile terminal and the wearable electronic device; receiving a radio-frequency signal with a password, which is transmitted by the wearable electronic device, by utilizing the mobile terminal when the distance between the wearable electronic device and the mobile terminal is smaller than a preset distance; analyzing the password from the received radio-frequency signal by the mobile terminal; and unlocking the mobile terminal by utilizing the password. By adopting the method and the system, an encrypted screen, file or application can be unlocked only by manually approaching the mobile terminal to the wearable electronic device, so that convenience and rapidness can be realized, and the inconvenience in manually unlocking the mobile terminal by utilizing a screen can be avoided.

The Chinese Application CN201020216383.3U filed on June 2, 2010 discloses a dual-band antenna cell phone, which comprises an SD (Secure Digital) card interface, a low-frequency antenna with a frequency of 13.56 MHz, a high-frequency antenna with a frequency of 2.4 GHz, a security authentication module, and payment modules. The security authentication module is used for checking whether or not a binding number in a payment card is in accordance with a serial number of a cell phone adopting an SIM (Subscriber Identity Module) card, if the binding number in the payment card is in accordance with the serial number of the cell phone adopting the SIM card, the binding number in the payment card is transmitted to a CA (Certificate Authority) by the security authentication module via a mobile channel to perform security certification. The payment modules comprise an on-site payment module and a remote payment module, wherein the on-site payment module comprises a short-distance payment module using a low frequency antenna and a middle-distance payment module using the high-frequency antenna, and the switching-over between the short-distance and the middle-distance payment modes is achieved via a payment control push key; and wireless payment is completed by the remote payment module via a mobile communication network. By adopting the cell phone provided by the utility model, the coexistence of various payment modes in the short, the middle and the remote distance on the terminal of the cell phone can be realized without needing a financial payment card.

### SUMMARY OF THE DISCLOSURE

The primary technical problem the present disclosure attempting to solve is, directing at the above mentioned deficiencies existing in the prior art, to provide a method of unlocking a mobile terminal within a short distance without adding extra costs and components. The unlocking method is employed with automatic intelligent technologies, which does not add to extra costs and makes operations simple and convenient with high reliability.

The invention is set out in the appended set of claims.

In summary, concerning the automatic unlocking method and system for a mobile terminal within a short distance according to the present disclosure, the mobile terminal detects whether there is a wearable device that has been performed the ID verification code match when the screen of the mobile terminal is locked, and determines whether the distance between the mobile terminal and the wearable device is within a predetermined distance range when it detects the wearable device that has been performed the ID verification code match, and unlocks automatically and enters the home screen when the distance between the mobile terminal and the wearable device is determined to be within the predetermined distance range. Thus, the mobile terminal is enabled with automatic unlocking function, which eliminates the need of repeated manual unlocking in frequent use of mobile terminals and further allows easy use of mobile terminals for a user who meanwhile uses a wearable device, thereby bringing profound convenience to daily use of mobile terminals.

### BRIEF DESCRIPTION OF THE DRAWINGS

FIG. 1 is a flow chart diagram of an automatic unlocking method for a mobile terminal within a short distance according to an embodiment of the present disclosure.
FIG. 2 is a flow chart diagram of an automatic unlocking method for a mobile terminal within a short distance according to a specific example of the present disclosure.
FIG. 3 is a block diagram of an automatic unlocking system for a mobile terminal within a short distance in accordance with the automatic unlocking method for a mobile terminal within a short distance according to the present disclosure.

### DETAILED DESCRIPTION OF THE DISCLOSURE

In order to make the purposes and technical solutions and advantages of the present disclosure clear and definite, a detailed description will be made on the present disclosure with reference to the accompanying drawings and cited embodiments.

In the following description, specific embodiments of the present disclosure will be described with reference to steps or symbols executed by one or more computers, unless otherwise stated. Therefore, these steps and operations will be mentioned more than once to be executed by computers. The computer operations referred to herein comprise operations performed by computer processing units, which represents electronic signals of the data within a structured type. These operations transform the data or maintain the data in the memory system of the computer, wherein the data can be reconfigured or otherwise change the functioning of the computer through means well known by one of ordinary skill in the art. The data structure maintained by the data is the physical location of the memory. The data structure comprises particular characteristics defined by the data format. Although the principles of the present disclosure are illustrated by the above text, it should not be construed as a limit to the present disclosure. One of ordinary skill in the art will understand that the steps and operations described below can also be implemented by hardware.

The principles of the present disclosure are also performed by utilizing a number of other general-purposed or special-purposed operation environments, communication environments or configurations. Examples of well known operation systems, operation environments and configurations applicable to the present disclosure can comprise, but are not limited to, hand-held phones, personal computers, servers, multi-processor systems, micro-computer based systems, main frame computers and distributed computing environments containing any of the above mentioned systems or apparatuses.

The term "module" can be regarded as software objects executed on the computing system. The various components, modules, engines and services described herein can be regarded as objects implemented in the computing system. And the apparatuses and methods described herein are preferably implemented in the form of software, and can be without doubt implemented by hardware.

An automatic unlocking method for a mobile terminal within a short distance according to an embodiment of the present disclosure comprises the following steps:
S100: performing in advance a one-to-one ID (identity) verification code match between the mobile terminal and a wearable device, for utilizing the wearable device to unlock the mobile terminal.

In this embodiment, it needs to perform a one-to-one ID verification code match between the mobile terminal and the wearable device, for utilizing the wearable device to control unlock the mobile terminal, i.e., to set on the mobile terminal a wearable device for auto-sensing unlocking of the mobile terminal. In some embodiments, the wearable device is a wearable watch of the user.

S200: when a screen of the mobile terminal is locked, detecting by the mobile terminal whether there is a wearable device that has been performed the ID verification code match.

That is to say, when the screen of the mobile terminal is locked, the mobile terminal detects whether there is a wearable device around that has been performed the ID verification code match.

S300: if the mobile terminal detects the wearable device that has been performed the ID verification code match, determining by the mobile terminal whether the distance between the mobile terminal and the wearable device is within a predetermined distance range.

The predetermined distance range in the present embodiment is set to be within 1 meter.

S400: when the distance between the mobile terminal and the wearable device is determined to be within a predetermined distance range, unlocking by the mobile terminal and entering an operation interface.

That is, in this embodiment, when the distance between the mobile terminal and the wearable device is determined to be within 1 meter, the mobile terminal is automatically unlocked and entered the operation interface. The operation interface entered is a main screen of the mobile terminal, for example, a main screen corresponding to the Home button. Actually, in some embodiments, the operation interface entered is also the previous operation interface before the mobile terminal enters the lock screen. For example, when the user is browsing websites, the screen turns off due to the screen timeout, the operation interface entered when the screen is unlocked should come back to the previous website browsing interface.

Further, when the distance between the mobile terminal and the wearable device is determined to be not within the predetermined distance range, the mobile terminal prompts for manual unlocking. That is, when the distance between the mobile terminal and the wearable device is determined to be not within 1 meter, the mobile terminal prompts for manual unlocking.

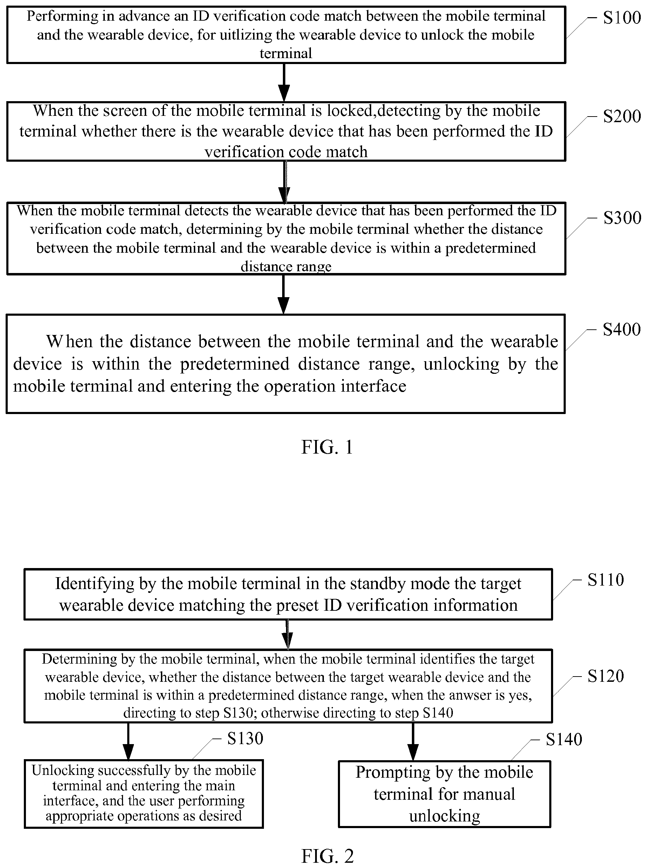

A further detailed description will be made on the methods according to the present disclosure with reference to specific embodiments:
Referring to FIG. 2, which is a flow chart diagram of an automatic unlocking method for a mobile terminal within a short distance according to a preferred example of the present disclosure. The automatic unlocking method for a mobile terminal within a short distance as shown in FIG. 2 comprises the following steps:
S110: identifying by the mobile terminal in the standby mode the target wearable device matching the preset ID verification information.
S120: determining by the mobile terminal, after the mobile terminal identifies the target wearable device, whether the distance between the target wearable device and the mobile terminal is within a predetermined distance range, when the answer is yes, directing to step S130; otherwise, directing to step S140.
S130: unlocking successfully by the mobile terminal and entering a main screen. The user performs appropriate operations as needed.
S140: when the distance between the mobile terminal and the wearable device is determined to be not within the predetermined distance range, prompting by the mobile terminal for manual unlocking.

In the automatic unlocking method for a mobile terminal within a short distance according to this particular embodiment, the step S110 further comprises the following steps:
A1: utilizing firstly by the mobile terminal a low frequency signal to search within a first distance range whether there is the target wearable device matching the ID verification code. If the answer is yes, directing to step S120; otherwise directing to step A2;
A2: utilizing by the mobile terminal a high frequency signal to search within a second distance range whether there is the target wearable device matching the ID verification code. If the answer is yes, directing to step S120; otherwise returning to step S110.

Wherein, the step S120 in this embodiment further comprises the following steps:
B1: determining by the mobile terminal that, after the mobile terminal identifies the target wearable device, when the distance between the target wearable device and the mobile terminal is within a first distance range, directing to the step S130; or within a second distance range, directing to step B2;
B2: entering by the mobile terminal into a manual unlocking interface and directing to the step S130 after the mobile terminal is unlocked manually by the user.

Additionally, the present embodiment further comprises the step of, before the step S110, presetting one-to-one ID verification information between the wearable device and the mobile terminal, and storing the preset ID verification information.

In the step A1, the mobile terminal firstly utilizes the low frequency signal to search within the first distance range whether there is the target wearable device matching the ID verification code, the searching time of the first distance range should be no more than 2 seconds, so as to ensure that, when there is not the target wearable device within the first distance range, the mobile terminal terminates the search with the low frequency signal and enter a subsequent step, thus avoiding unnecessary power consumption and effectively improving the pairing efficiency.

In this automatic unlocking method for a mobile terminal within a short distance, the ID verification between the wearable device and the target mobile terminal is performed via a Bluetooth sensor.

The following examples, aspects and embodiments are not according to the invention and are present for illustration purpose only.

It should be noted that the above mentioned embodiment generally initiates the search on the mobile terminal side, thus capitalizing on the large power capacity of the mobile terminal and guaranteeing the operation sustainability and avoiding too fast draining of the wearable device if the search is initiated by the wearable device. In addition, the search is also initiated on the wearable device side, and the step S110 is replaced by the following steps:
A1': utilizing firstly by the wearable device a low frequency signal to search within a first distance range whether there is the target mobile terminal that has been performed the ID verification code match. If the answer is yes, directing to step C; otherwise directing to step A2';
A2': utilizing by the wearable device a high frequency signal to search within a second distance range whether there is the target mobile terminal matching the ID verification code. If the answer is yes, directing to the step C; otherwise, entering the standby mode;

In the step A1' of the automatic unlocking method for a mobile terminal within a short distance, the wearable device firstly utilizes the low frequency signal to search within the first distance range whether there is the target mobile terminal matching the ID verification code, and the searching time of the first distance range is not more than 2 seconds.

As is ready to understand, using the wearable device to initiate the search improves the solution's flexibility and enable intelligent and active searching of and pairing with a mobile terminal according to the actions of the user, thus avoiding initiation of aimless searching of the mobile terminal.

The first distance range is the automatic unlocking area, and the second distance range is the manual unlocking area. Allowing for the effective transmission and reception range of the intelligent Bluetooth sensor employed in the present embodiment, the first distance range is from 0.2 to 1 meter, and the second distance range is greater than 1 meter. This ensures smooth data exchange within the effective range, thus enabling the method of the present disclosure to be secure and reliable within the effective range and precluding conditions where operations fail and the paring cannot be achieved.

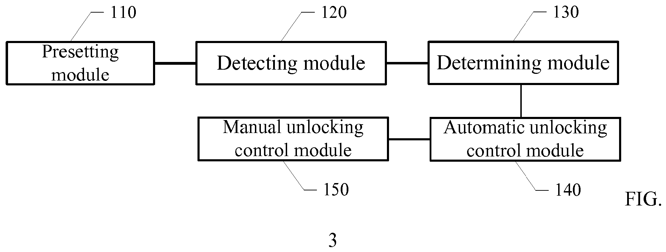

Based on the contents of the above embodiment, the present disclosure further provides an automatic unlocking system for a mobile terminal within a short distance, the system comprising, as is shown in FIG. 3:
an presetting module 110, being configured to perform in advance a one-to-one ID verification code match between the mobile terminal and a wearable device, for utilizing the wearable device to unlock the target mobile terminal; for detailed description, please see above.
a detection module 120, being configured to, when a screen of the mobile terminal is locked, detect by the mobile terminal whether there is the wearable device that has been performed the ID verification code match; for detailed description, please see above.
a determining module 130, being configured to, when the mobile terminal detects the wearable device that has been performed the ID verification code match, determine by the mobile terminal whether the distance between the mobile terminal and the wearable device is within a predetermined distance range; for detailed description, please see above.
an automatic unlocking control module 140, being configured to, when the distance between the mobile terminal and the wearable device is determined to be within the predetermined distance range, unlock by the mobile terminal and enter an operation interface; for detailed description, please see above.
a manual unlocking control module 150, being configured to, when the distance between the mobile terminal and the wearable device is determined to be not within the predetermined distance range, prompt by the mobile terminal for manual unlocking; for detailed description, please see above.

In the automatic unlocking system for a mobile terminal within a short distance, the predetermined distance is 1 meter.

Additionally, the determining module 130 comprises:
a first search control unit, being configured to control the mobile terminal firstly utilize a low frequency signal to search within the first distance range whether there is the target wearable device that has been performed the ID verification code match; for detailed description, please see above.
a second search control unit, being configured to, when the mobile terminal utilizes the low frequency signal to search within the first distance range but doesn't discover the target wearable device, control the mobile terminal utilize a high frequency signal to search within a second distance range whether there is the target wearable device matching the ID verification code; for detailed description, please see above.

Similarly, in other embodiments, the search is also initiated at the wearable device side, and the determining module comprises:
a first search control unit, being configured to control the wearable device firstly utilize a low frequency signal to search within the first distance range whether there is the target mobile terminal that has been performed the ID verification code match; for detailed description, please see above.
a second search control unit, being configured to, when the wearable device utilizes the low frequency signal to search within the first distance range but doesn't discover the target mobile terminal, control the wearable device utilize a high frequency signal to search within a second distance range whether there is the target mobile terminal matching the ID verification code; for detailed description, please see above.

As is concluded, concerning the automatic unlocking method and system for a mobile terminal within a short distance, the mobile terminal detects whether there is a wearable device that has been performed the ID verification code match when its screen is locked, and determines whether the distance between the mobile terminal and the wearable device is within a predetermined distance range when the mobile terminal detects the wearable device that has been performed the ID verification code match, and unlocks and enters the home interface when the distance between the mobile terminal and the wearable device is determined to be within the predetermined distance range. Thus, the mobile terminal is enabled with automatic unlocking function, which eliminates the need of repeated manual unlocking in frequent use of mobile terminals and further allows easy use of mobile terminal for the user who is meanwhile using a wearable device, thereby bringing profound convenience to daily use of mobile terminals.

## Claims

1. An automatic unlocking method for a mobile terminal within a distance, wherein the automatic unlocking method comprises the following steps:
performing (S100) in advance an (ID) verification code match between the mobile terminal and a wearable device, for utilizing the wearable device to unlock the mobile terminal for auto-sensing unlocking of the mobile terminal;
detecting (S200), by the mobile terminal, whether the wearable device has performed the ID verification code match when a screen of the mobile terminal is locked by utilizing (A1) firstly a low frequency signal to search within a first distance range;
**characterized in that**, the automatic unlocking method further comprising the following steps:
detecting (S200), by the mobile terminal, whether a wearable device has performed the ID verification code match by utilizing (A2) a high frequency signal to search within a second distance range when the mobile terminal does not detect the wearable device that has performed the ID verification code match within the first distance range, wherein the second distance range is wider than the first distance range;
determining (S300), by the mobile terminal, whether a distance between the mobile terminal and the wearable device is within a predetermined distance range when the mobile terminal detects the wearable device that has performed the ID verification code match; and
unlocking (S400) automatically by the mobile terminal and entering an operation interface when the distance between the mobile terminal and the wearable device is determined to be within the predetermined distance range.

2. The automatic unlocking method according to claim 1, further comprising, after the step of determining (S300), by the mobile terminal, whether the distance between the mobile terminal and the wearable device is within a predetermined distance range:
prompting (S410) by the mobile terminal for manual unlocking when the distance between the mobile terminal and the wearable device is determined to be not within the predetermined distance range.

3. The automatic unlocking method according to claim 1 or 2, wherein the predetermined distance range is within 1 meter.

4. The automatic unlocking method according to any of claims 1 to 3, wherein the wearable device and the mobile terminal perform the ID verification via a Bluetooth sensor.

5. The automatic unlocking method according to claim 1, wherein the searching time of the first distance range is not more than 2 seconds.

6. The automatic unlocking method according to claim 1 or 5, wherein the first distance range is from 0.2 to 1 meter, and the second distance range is greater than 1 meter.

## Patentansprüche

1. Ein automatisches Entsperrverfahren für ein mobiles Endgerät innerhalb einer Entfernung, wobei das automatische Entsperrverfahren die folgenden Schritte beinhaltet:
Durchführen (S100) eines (ID)-Verifizierungscodeabgleichs im Voraus zwischen dem mobilen Endgerät und einer tragbaren Vorrichtung, um die tragbare Vorrichtung zum Entsperren des mobilen Endgeräts dazu zu verwenden, ein Entsperren des mobilen Endgeräts automatisch zu erkennen;
Detektieren (S200), durch das mobile Endgerät, ob die tragbare Vorrichtung den ID-Verifizierungscodeabgleich durchgeführt hat, wenn ein Bildschirm des mobilen Endgeräts gesperrt ist, indem zuerst ein Niederfrequenzsignal zum Suchen innerhalb eines ersten Entfernungsbereichs verwendet wird (A1);
**dadurch gekennzeichnet, dass** das automatische Entsperrverfahren ferner die folgenden Schritte beinhaltet:
Detektieren (S200), durch das mobile Endgerät, ob eine tragbare Vorrichtung den ID-Verifizierungscodeabgleich durchgeführt hat, indem ein Hochfrequenzsignal zum Suchen innerhalb eines zweiten Entfernungsbereichs verwendet wird (A2), wenn das mobile Endgerät die tragbare Vorrichtung, die den ID-Verifizierungscodeabgleich durchgeführt hat, innerhalb des ersten Entfernungsbereichs nicht detektiert, wobei der zweite Entfernungsbereich größer ist als der erste Entfernungsbereich;
Bestimmen (S300), durch das mobile Endgerät, ob eine Entfernung zwischen dem mobilen Endgerät und der tragbaren Vorrichtung innerhalb eines vorgegebenen Entfernungsbereichs liegt, wenn das mobile Endgerät die tragbare Vorrichtung, die den ID-Verifizierungscodeabgleich durchgeführt hat, detektiert; und
automatisches Entsperren (S400) durch das mobile Endgerät und Darstellen einer Bedienoberfläche, wenn bestimmt wird, dass die Entfernung zwischen dem mobilen Endgerät und der tragbaren Vorrichtung innerhalb des vorgegebenen Entfernungsbereichs liegt.

2. Automatisches Entsperrverfahren gemäß Anspruch 1, das ferner nach dem Schritt des Bestimmens (S300), durch das mobile Endgerät, ob die Entfernung zwischen dem mobilen Endgerät und der tragbaren Vorrichtung innerhalb eines vorgegebenen Entfernungsbereichs liegt, Folgendes beinhaltet:
Auffordern (S410), durch das mobile Endgerät, zum manuellen Entsperren, wenn bestimmt wird, dass die Entfernung zwischen dem mobilen Endgerät und der tragbaren Vorrichtung nicht innerhalb des vorgegebenen Entfernungsbereichs liegt.

3. Automatisches Entsperrverfahren gemäß Anspruch 1 oder 2, wobei der vorgegebene Entfernungsbereich innerhalb von 1 Meter liegt.

4. Automatisches Entsperrverfahren gemäß einem der Ansprüche 1 bis 3, wobei die tragbare Vorrichtung und das mobile Endgerät die ID-Verifizierung mittels eines Bluetooth-Sensors durchführen.

5. Automatisches Entsperrverfahren gemäß Anspruch 1, wobei die Suchzeit des ersten Entfernungsbereichs nicht mehr als 2 Sekunden beträgt.

6. Automatisches Entsperrverfahren gemäß Anspruch 1 oder 5, wobei der erste Entfernungsbereich 0,2 bis 1 Meter beträgt und der zweite Entfernungsbereich mehr als 1 Meter beträgt.

## Revendications

1. Un procédé de déverrouillage automatique pour un terminal mobile à une certaine distance, le procédé de déverrouillage automatique comprenant les étapes suivantes :
la réalisation (S100) par avance d'un appariement de code de vérification (ID) entre le terminal mobile et un dispositif portable sur le corps, en vue d'utiliser le dispositif portable sur le corps pour déverrouiller le terminal mobile pour un déverrouillage auto-sensible du terminal mobile ;
la détection (S200), par le terminal mobile, pour savoir si le dispositif portable sur le corps a réalisé l'appariement de code de vérification ID lorsqu'un écran du terminal mobile est verrouillé par l'utilisation (A1) en premier lieu d'un signal de basse fréquence pour effectuer une recherche au sein d'une première gamme de distance ;
caractérisé en que, le procédé de déverrouillage automatique comprend en outre les étapes suivantes :
la détection (S200), par le terminal mobile, pour savoir si un dispositif portable sur le corps a réalisé l'appariement de code de vérification ID par l'utilisation (A2) d'un signal de haute fréquence pour effectuer une recherche au sein d'une deuxième gamme de distance lorsque le terminal mobile ne détecte pas le dispositif portable sur le corps qui a réalisé l'appariement de code de vérification ID au sein de la première gamme de distance, la deuxième gamme de distance étant plus étendue que la première gamme de distance ;
la détermination (S300), par le terminal mobile, pour savoir si une distance entre le terminal mobile et le dispositif portable sur le corps se trouve au sein d'une gamme de distance prédéterminée lorsque le terminal mobile détecte le dispositif portable sur le corps qui a réalisé l'appariement de code de vérification ID ; et
le déverrouillage (S400) de manière automatique par le terminal mobile et le passage à une interface fonctionnelle lorsqu'il est déterminé que la distance entre le terminal mobile et le dispositif portable sur le corps se trouve au sein de la gamme de distance prédéterminée.

2. Le procédé de déverrouillage automatique selon la revendication 1, comprenant en outre, après l'étape de détermination (S300), par le terminal mobile, pour savoir si la distance entre le terminal mobile et le dispositif portable sur le corps se trouve au sein d'une gamme de distance prédéterminée :
l'invitation (S410) par le terminal mobile à un déverrouillage manuel lorsqu'il est déterminé que la distance entre le terminal mobile et le dispositif portable sur le corps ne se trouve pas au sein de la gamme de distance prédéterminée.

3. Le procédé de déverrouillage automatique selon la revendication 1 ou la revendication 2, dans lequel la gamme de distance prédéterminée est dans une limite de 1 mètre.

4. Le procédé de déverrouillage automatique selon n'importe lesquelles des revendications 1 à 3, dans lequel le dispositif portable sur le corps et le terminal mobile réalisent la vérification ID via un capteur Bluetooth.

5. Le procédé de déverrouillage automatique selon la revendication 1, dans lequel le temps de recherche de la première gamme de distance ne dépasse pas 2 secondes.

6. Le procédé de déverrouillage automatique selon la revendication 1 ou la revendication 5, dans lequel la première gamme de distance va de 0,2 à 1 mètre, et la deuxième gamme de distance est supérieure à 1 mètre.
